# FASCICULE DE BREVET EUROPEEN

(11) **EP 3 734 901 B1**
(45) Date de publication et mention de la délivrance du brevet: **21.06.2023**
(21) Numéro de dépôt: 20171849.1
(22) Date de dépôt: 28.04.2020
(51) Int. Cl.: H04L 9/08, H04L 9/14, H04L 9/32

(54) **PROCÉDÉ DE TRANSMISSION SÉCURISÉE DE DONNÉES**
GESICHERTES DATENÜBERTRAGUNGSVERFAHREN
METHOD FOR SECURE DATA TRANSMISSION

(30) Priorité: 02.05.2019 FR 1904620
(43) Date de publication de la demande: 04.11.2020
(73) Titulaire: SAGEMCOM BROADBAND SAS, 92500 Rueil-Malmaison (FR)
(72) Inventeur: ROCQUELAY, Antonie, 92500 RUEIL MALMAISON (FR); MEVISSEN, Olivier, 92500 RUEIL MALMAISON (FR)
(74) Mandataire: Cabinet Le Guen Maillet

(56) Documents cités:
- CN-A- 105 376 589
- Sebastian 0 Verschoor: "OMEMO: CRYPTOGRAPHIC ANALYSIS REPORT", , 1 juin 2016 (2016-06-01), XP055670126, Extrait de l'Internet: URL:https://conversations.im/omemo/audit.p df [extrait le 2020-02-19]
- TILMAN FROSCH ET AL: "How Secure is TextSecure?", 2016 IEEE EUROPEAN SYMPOSIUM ON SECURITY AND PRIVACY (EUROS&P), 1 mai 2016 (2016-05-01), pages 457-472, XP055566892, DOI: 10.1109/EuroSP.2016.41 ISBN: 978-1-5090-1752-2
- PAUL RÖSLER ET AL: "More is Less: On the End-to-End Security of Group Chats in Signal, WhatsApp, and Threema", IACR, INTERNATIONAL ASSOCIATION FOR CRYPTOLOGIC RESEARCH , vol. 20180219:133524 6 janvier 2018 (2018-01-06), pages 1-30, XP061024035, Extrait de l'Internet: URL:http://eprint.iacr.org/2017/713.pdf [extrait le 2018-01-06]
- T. Dierks: "RFC 5246 - The Transport Layer Security (TLS) Protocol Version 1.2", , 31 août 2008 (2008-08-31), XP055270691, Extrait de l'Internet: URL:https://tools.ietf.org/html/rfc5246 [extrait le 2016-05-04]
- KARTHIKEYAN BHARGAVAN ET AL: "Proving the TLS Handshake Secure (as it is)", IACR, INTERNATIONAL ASSOCIATION FOR CRYPTOLOGIC RESEARCH, vol. 20140812:080609, 31 July 2014 (2014-07-31), pages 1-48, XP061016712, [retrieved on 2014-07-31]

## Description

### DOMAINE TECHNIQUE

La présente invention concerne un procédé de transmission sécurisée de données dans une architecture de transmission agencée autour d'un agent de messagerie, parfois aussi appelé « agent de messages » ou « courtier de messages » ou « courtier de messagerie » (« message broker » en anglais).

### ETAT DE LA TECHNIQUE ANTERIEURE

Un agent de messagerie agit comme un intermédiaire entre différents éléments qui doivent communiquer entre eux, permettant ainsi un découplage de ces différents éléments. Une difficulté se pose lorsque les différents éléments communiquant entre eux doivent impérativement respecter des contraintes de transmission sécurisée de bout en bout. En effet, la mise en oeuvre d'un agent de messagerie dans la chaîne de transmission de données introduit par définition un intermédiaire qui fragilise la sécurisation des données.

Plus précisément, une communication de bout en bout peut être sécurisée grâce par exemple au protocole TLS (« Transport Layer Security » en anglais)), ce qui permet dans une relation client-serveur d'assurer l'authentification de base du serveur (simple authentification) et du client si le serveur le demande (mutuelle authentification), ainsi que la confidentialité et l'intégrité des données échangées. La présence d'un agent de messagerie impose alors d'utiliser le protocole TLS entre l'agent de messagerie et chacun des différents éléments qui doivent communiquer entre eux, mais les contraintes de sécurité de bout en bout ne sont plus respectées du fait que l'agent de messagerie a alors lui-même accès aux données échangées non chiffrées entre lesdits différents éléments. De plus, ce type d'agent de messagerie est spécifique, du fait du support des protocoles de sécurité tel que TLS ou SASL (« Simple Authentification and Security Layer » en anglais). De plus, en considérant une messagerie adressant des millions d'utilisateurs, comme c'est le cas par exemple des systèmes de télévision sur Internet, il est extrêmement coûteux en termes de ressources de s'appuyer sur des connexions mutuellement authentifiées car, dans ce cas, il est nécessaire de fournir à chaque utilisateur un certificat dédié unique et de gérer une infrastructure de clefs publiques PKI (« Public Key Infrastructure » en anglais) apte à délivrer une quantité de certificats adaptée à la quantité d'utilisateurs potentiels.

Il est possible d'ajouter un chiffrement et une authentification sur chaque message échangé via l'agent de messagerie, afin d'assurer une sécurité de bout en bout et de limiter la portée des données utiles d'un message au destinataire de ces données utiles. Une première approche consiste alors à utiliser un chiffrement asymétrique sur les données utiles du message et une signature sur le message complet, afin d'assurer la confidentialité et la non-répudiation, et de n'utiliser que des paires de clés privées / publiques, qui sont de gestion aisée mais qui nécessitent d'importantes ressources de traitement (e.g., capacités CPU (« Central Processing Unit » en anglais)). Toutefois, cette première approche n'est pas applicable dans le cas d'équipements embarqués possédant de faibles ressources de traitement et devant envoyer / recevoir beaucoup de messages, comme c'est le cas dans l'Internet des Objets IoT (« Internet of Things » en anglais). Une deuxième approche consiste à utiliser un chiffrement symétrique sur les données utiles du message, une signature sur le message complet et le transport, pour le chiffrement symétrique, d'une clef secrète elle-même chiffrée de manière asymétrique, afin d'assurer la confidentialité et la non-répudiation, et d'utiliser ici encore des paires de clés publiques / privées. Toutefois, cette deuxième approche ne fait que soulager légèrement le besoin en ressources de traitement par rapport à la première approche, en éliminant uniquement le besoin de chiffrement asymétrique sur les données utiles du message. Une troisième approche consiste à utiliser un code d'authentification de message, e.g., de type HMAC (« keyed-Hash Message Authentication Code » en anglais, ou code d'authentification de message par empreinte cryptographique avec clé), sur le message complet et un chiffrement symétrique sur les données utiles du message, afin d'assurer la confidentialité et l'authentification. Toutefois, cette troisième approche n'est pas applicable car elle implique une perte de la non-répudiation par rapport aux deux approches précédentes.

Le document «OMEMO: CRYPTOGRAPHIC ANALYSIS REPORT», Sebastian Verschoor, 1 juin 2016 (2016-06-01), XP055670126 décrit une analyse de protocole de sécurité, adapté au protocole Signal, et permettant d'effectuer un transfert de fichiers cryptés. Le document « How secure is TextSecure? » Tilman Frosh et al., 2016 IEEE EUROPEAN SYMPOSIUM ON SECURITY AND PRIVACY (EUROS&P), 1 mai 2016 (2016-05-01), pages 457-472, XP055566892 décrit un protocole permettant le transfert et l'échange de messages instantanés de manière sécurisée de bout en bout.

Le document « More is Less : On the End-to-End Security of Group Chats in Signal, WhatsApp, and Threema », Paul Rösler et al., IACR, INTERNATIONAL ASSOCIATION FOR CRYPTOLOGIC RESEARCH, vol . 20180219:133524 6 janvier 2018, pages 1-30, XP061024035, décrit un protocole d'échange de messages sécurisé de bout en bout dans le cadre de communications de groupe.

Il est alors souhaitable de pallier ces inconvénients de l'état de la technique.

Il est notamment souhaitable de fournir une solution qui permette d'assurer la sécurité de bout en bout malgré la présence de l'agent de messagerie, et ce de manière à être capable de supporter des équipements communicants ayant des capacités de traitement variées (i.e., pouvant aussi bien être des ressources de traitement d'équipements embarqués que des ressources de traitement de nuage informatique).

Il est notamment souhaitable de fournir une solution qui soit adaptée autant aux agents de messagerie utilisant des mécanismes de type Publier-Abonner (« Publish-Subscribe » en anglais) qu'aux agents de messagerie utilisant des mécanismes de type « routed RPC (« Remote Procedure Call » en anglais)) ».

### EXPOSE DE L'INVENTION

Un objet de la présente invention est de proposer un procédé de transmission de données sécurisée de bout-en-bout entre un premier dispositif et un second dispositif via un agent de messagerie, caractérisé en ce que le procédé comporte les étapes suivantes : partage d'une réserve d'entropie (nécessitant la non-répudiation, l'intégrité et la confidentialité) entre le premier dispositif et le second dispositif via l'agent de messagerie, par transmission de messages de signalisation qui comportent une signature de message et dont au moins un message de signalisation comprend dans ses données utiles ladite réserve d'entropie, lesdites données utiles sont chiffrées de manière asymétrique , ladite réserve d'entropie étant un ensemble de données aptes à générer une pluralité de clefs d'authentification et de clefs de chiffrement symétrique par agrégation de données stockées dans ladite réserve d'entropie et les clefs d'authentification et de chiffrement étant identifiées grâce à des identifiants respectifs obtenus par agrégation de valeurs d'index, chaque valeur d'index identifiant une donnée constitutive de la clef, les valeurs d'index permettant de retrouver les données correspondantes dans ladite réserve d'entropie ; et transmission de messages ultérieurs entre le premier dispositif et le second dispositif via l'agent de messagerie, chaque dit message ultérieur comportant un entête et des données utiles, l'entête comportant l'identifiant d'une clef d'authentification (nécessitant l'authentification et l'intégrité) obtenue à partir de la réserve d'entropie partagée (possédant la non-répudiation) et l'identifiant d'une clef de chiffrement symétrique (nécessitant l'authentification et l'intégrité) obtenue à partir de la réserve d'entropie partagée (possédant la non-répudiation), les données utiles étant chiffrées de manière symétrique grâce à la clef de chiffrement symétrique, et l'ensemble formé par l'entête et les données utiles étant authentifié grâce à un code d'authentification (apportant l'authentification et l'intégrité) de message obtenu grâce à la clef d'authentification et inséré dans l'entête. Ainsi, la sécurité de bout en bout est assurée, tout en minimisant les besoins de ressources de traitement par l'emploi d'un chiffrement symétrique qui a hérité de la non-répudiation apportée par la manière dont la réserve d'entropie a été partagée au préalable entre le premier dispositif et le second dispositif. Selon un mode de réalisation particulier, le code d'authentification de messages est de type HMAC. Ainsi, la sécurité de bout en bout est renforcée.

Ainsi, de nombreuses clefs d'authentification peuvent être aisément générées et identifiées grâce à une réserve d'entropie de structure simple.

Selon un mode de réalisation particulier, la clef d' authentification est obtenue par agrégation de premières données stockées dans la réserve d'entropie et l'identifiant de la clef d'authentification est un index d'une table d'agrégation d'index auquel est stockée l'agrégation des index correspondant auxdites premières données dans la réserve d'entropie. Selon un mode de réalisation particulier, la clef de chiffrement symétrique est obtenue par agrégation de secondes données stockées dans la réserve d'entropie et l'identifiant de la clef de chiffrement symétrique est obtenu par agrégation d'index correspondant auxdites secondes données dans la réserve d'entropie. Ainsi, de nombreuses clefs de chiffrement symétrique peuvent être aisément générées et identifiées grâce à une réserve d'entropie de structure simple.

Selon un mode de réalisation particulier, la clef de chiffrement symétrique est obtenue par agrégation de secondes données stockées dans la réserve d'entropie et l'identifiant de la clef d'authentification est un index d'une table d'agrégation d'index auquel est stockée l'agrégation des index correspondant auxdites secondes données dans la réserve d'entropie. Selon un mode de réalisation particulier, le premier dispositif effectue de la même manière des émissions et réceptions de données sécurisées de bout-en-bout avec un troisième dispositif via l'agent de messagerie, en utilisant la même réserve d'entropie qu'avec le second dispositif. Ainsi, le premier dispositif, le second dispositif et le troisième dispositif opèrent aisément dans un même environnement de groupe sécurisé de bout en bout.

Selon un mode de réalisation particulier, le premier dispositif effectue de la même manière des émissions et réceptions de données sécurisées de données de bout-en-bout avec un troisième dispositif via l'agent de messagerie, en utilisant une réserve d'entropie distincte de la réserve d'entropie utilisée avec le second dispositif. Ainsi, le premier dispositif et le second dispositif, d'une part, et le premier dispositif et le troisième dispositif, d'autre part, opèrent aisément dans des environnements privés sécurisés de bout en bout.

Selon un mode de réalisation particulier, le premier dispositif effectue des émissions de données sécurisées de bout-en-bout vers le deuxième dispositif et un troisième dispositif via l'agent de messagerie, en utilisant une réserve d'entropie dédiée uniquement à l'émission de messages venant du premier dispositif et à la réception desdits messages par les deuxième et troisième dispositifs. Ainsi, seul le premier dispositif opère aisément en émission, et le deuxième et le troisième dispositif opèrent en réception, dans un environnement privé sécurisé de bout-en-bout.

Selon un mode de réalisation particulier, le premier dispositif effectue des réceptions de données sécurisées de bout-en-bout venant du deuxième dispositif et d'un troisième dispositif via l'agent de messagerie, en utilisant une réserve d'entropie dédiée à la réception de messages par le premier dispositif depuis le deuxième et le troisième dispositif, et à l'émission de messages à destination dudit premier dispositif. Ainsi seul le premier dispositif opère aisément en réception, et le deuxième dispositif et le troisième dispositif opèrent en émission vers le premier dispositif, dans un environnement privé sécurisé de bout-en-bout. Selon un mode de réalisation particulier, le premier dispositif est un décodeur télévisuel et le second dispositif est un terminal configuré et adapté pour contrôler le décodeur télévisuel via une transmission de données sécurisée de bout en bout. Ainsi, le décodeur télévisuel est aisément contrôlé de manière sécurisée.

Selon un mode de réalisation particulier, le premier dispositif est un nuage informatique et le second dispositif est un terminal configuré et adapté pour transmettre des données analytiques au nuage informatique via la transmission de données sécurisée de bout en bout. Ainsi, le nuage informatique reçoit aisément les données analytiques de manière sécurisée. Selon un mode de réalisation particulier, la réserve d'entropie est stockée, au sein du nuage informatique, dans une base de données accessible par chaque instance d'application en communication avec le second dispositif. Ainsi, la duplication de la réserve d'entropie parmi les instances d'applications est évitée, ce qui permet d'aisément appliquer un contrôle d'accès à la réserve d'entropie par les instances d'application du nuage informatique. L'invention concerne également un programme d'ordinateur, qui peut être stocké sur un support et/ou téléchargé d'un réseau de communication, afin d'être lu par un processeur. Ce programme d'ordinateur comprend des instructions pour implémenter le procédé mentionné ci-dessus dans l'un quelconque de leurs modes de réalisation, lorsque ledit programme est exécuté par le processeur. L'invention concerne également un support de stockage d'informations stockant un tel programme d'ordinateur.

L'invention concerne également un dispositif, appelé premier dispositif, adapté et configuré pour effectuer une transmission de données sécurisée de bout-en-bout avec un second dispositif via un agent de messagerie. Le premier dispositif comporte : des moyens pour partager une réserve d'entropie entre le premier dispositif et le second dispositif via l'agent de messagerie, par transmission de messages de signalisation qui comportent une signature de message et dont au moins un message de signalisation comprend dans ses données utiles ladite réserve d'entropie, lesdites données utiles étant chiffrées de manière asymétrique ladite réserve d'entropie étant un ensemble de données aptes à générer des clefs d'authentification et des clés de chiffrement symétrique par agrégation de données stockées dans ladite réserve d'entropie et les clefs d'authentification et de chiffrement étant identifiées grâce à des identifiants respectifs obtenus par agrégation de valeurs d'index, chaque valeur d'index identifiant une donnée constitutive de la clef, les valeurs d'index permettant de retrouver les données correspondantes dans ladite réserve d'entropie ; et des moyens pour transmettre des messages ultérieurs entre le premier dispositif et le second dispositif via l'agent de messagerie, chaque dit message ultérieur comportant un entête et des données utiles, l'entête comportant l'identifiant d'une clef d'authentification obtenue à partir de la réserve d'entropie partagée et l'identifiant d'une clef de chiffrement symétrique obtenue à partir de la réserve d'entropie partagée, les données utiles étant chiffrées de manière symétrique grâce à la clef de chiffrement symétrique, et l'ensemble formé par l'entête et les données utiles étant authentifié grâce à un code d'authentification de message obtenu grâce à la clef d'authentification et inséré dans l'entête.

### BREVE DESCRIPTION DES DESSINS

Les caractéristiques de l'invention mentionnées ci-dessus, ainsi que d'autres, apparaîtront plus clairement à la lecture de la description suivante d'au moins un exemple de réalisation, ladite description étant faite en relation avec les dessins joints, parmi lesquels :
[Fig. 1] illustre schématiquement un premier exemple d'un système de communication dans lequel la présente invention peut être implémentée ;
[Fig. 2] illustre schématiquement un second exemple du système de communication ;
[Fig. 3] illustre schématiquement un exemple d'agencement matériel de dispositif du système de communication ;
[Fig. 4] illustre schématiquement un algorithme de partage de réserve d'entropie ;
[Fig. 5] illustre schématiquement un exemple d'échanges pour le partage de réserve d'entropie ;
[Fig. 6] illustre schématiquement un exemple de format de message de signalisation pour le partage de réserve d'entropie ;
[Fig. 7] illustre schématiquement un premier exemple de format de message sécurisé grâce au partage de réserve d'entropie ;
[Fig. 8] illustre schématiquement un second exemple de format de message sécurisé grâce au partage de réserve d'entropie ;
[Fig. 9] illustre schématiquement un algorithme d'envoi de message sécurisé grâce au partage de réserve d'entropie ; et
[Fig. 10] illustre schématiquement un agencement de réserve d'entropie.

### EXPOSE DETAILLE DE MODES DE REALISATION

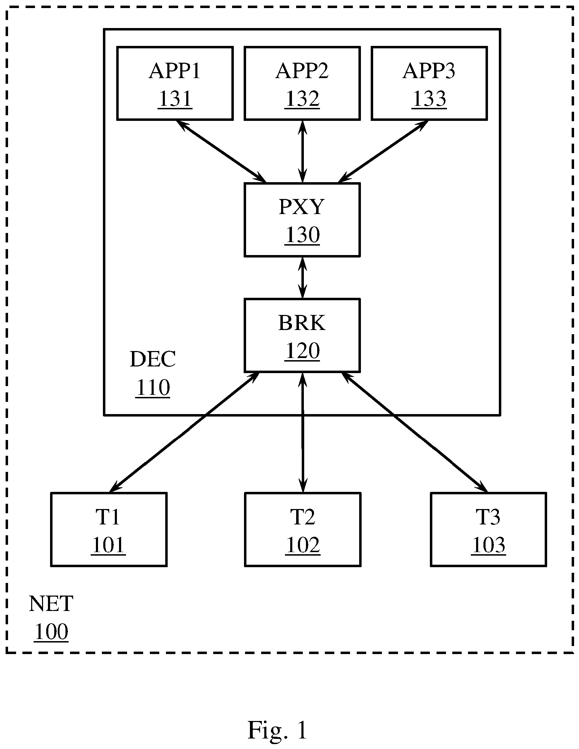

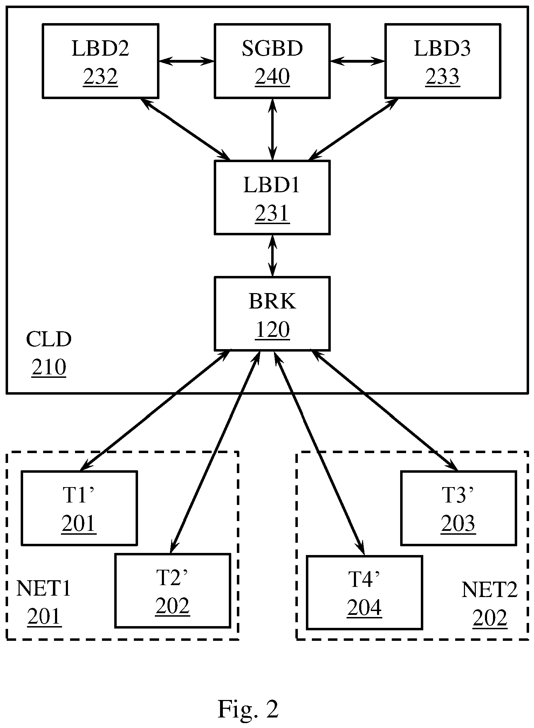

La description qui suit présente une transmission de données sécurisée de bout-en-bout depuis un premier dispositif vers un second dispositif via un agent de messagerie, comportant : un partage d'une réserve d'entropie entre le premier dispositif et le second dispositif via l'agent de messagerie, par le biais de messages de signalisation dont les éventuelles données utiles sont chiffrées de manière asymétrique et qui comportent une signature de message ; et une transmission de messages ultérieurs entre le premier dispositif et le second dispositif via l'agent de messagerie, chaque dit message ultérieur comportant un entête et des données utiles, l'entête comportant un identifiant d'une clef d'authentification obtenue à partir de la réserve d'entropie partagée et un identifiant d'une clef de chiffrement symétrique obtenue à partir de la réserve d'entropie partagée, les données utiles étant chiffrées de manière symétrique grâce à la clef de chiffrement symétrique, et l'ensemble formé par l'entête et les données utiles étant authentifié grâce à un code d'authentification obtenu grâce à la clef d'authentification et inséré dans l'entête. La description qui suit présente cette transmission de données sécurisée de bout-en-bout dans un système de communication (l'agent de messagerie pouvant, ou pas, être inclus dans le système de communication en question) dont des exemples sont illustrés sur les Figs. 1 et 2.

La **Fig. 1** illustre ainsi schématiquement un premier exemple d'un système de communication dans lequel la présente invention peut être implémentée.

Sur la Fig. 1, le système de communication s'inscrit dans un réseau domestique (« home network » en anglais) NET 100. Le système de communication comporte un décodeur télévisuel DEC 110 adapté et configuré pour décoder des flux audiovisuels. Ces flux audiovisuels sont typiquement reçus par le décodeur télévisuel DEC 110 en provenance d'un réseau de distribution, tel que l'Internet. Par exemple, le décodeur télévisuel DEC 110 est connecté à une passerelle domestique (« residential gateway » en anglais) fournissant un accès à l'Internet pour permettre au décodeur télévisuel DEC 110 de recevoir ces flux audiovisuels.

Au sein du réseau domestique NET 100, le décodeur télévisuel DEC 110 est connecté, par exemple grâce à des connexions sans-fil de type Wi-Fi (marque déposée), à au moins un terminal T1 101, T2 102, T3 103. Par exemple, le terminal T1 101 est un téléphone intelligent (« smartphone » en anglais), le terminal T2 102 est une tablette et le terminal T3 103 est un ordinateur portable (« laptop » en anglais). Chaque terminal T1 101, T2 102, T3 103 est adapté et configuré pour contrôler à distance le décodeur télévisuel DEC 110. Le décodeur télévisuel DEC 110 comporte une ou plusieurs applications APP1 131, APP2 132, APP3 133. Le décodeur télévisuel DEC 110 comporte en outre un agent de messagerie BRK 120, par exemple de type WAMP (« Web Application Messaging Protocol » en anglais). Chaque terminal T1 101, T2 102, T3 103 comporte une application adaptée et configurée pour communiquer avec une ou plusieurs applications APP1 131, APP2 132, APP3 133 du décodeur télévisuel DEC 110 par l'intermédiaire de l'agent de messagerie BRK 120.

Lorsque le décodeur télévisuel DEC 110 comporte plusieurs applications APP1 131, APP2 132, APP3 133, le décodeur télévisuel DEC 110 peut inclure une application mandataire (« proxy application » en anglais) PXY 130 servant d'intermédiaire interne au décodeur télévisuel DEC 110 entre l'agent de messagerie BRK 120 et les applications APP1 131, APP2 132, APP3 133.

L'invention permet de sécuriser les échanges entre chaque application de terminal T1 101, T2 102, T3 103 et chaque application APP1 131, APP2 132, APP3 133, ou du moins entre chaque application de terminal T1 101, T2 102, T3 103 et l'application mandataire PXY 130. Pour ce faire, une réserve d'entropie (« entropy pool » en anglais) est partagée entre chaque application APP1 131, APP2 132, APP3 133 du décodeur télévisuel DEC 110 et chaque application de terminal T1 101, T2 102, T3 103 autorisée à échanger avec ladite application du décodeur télévisuel DEC 110. En présence de l'application mandataire PXY 130, la réserve d'entropie est partagée entre l'application mandataire PXY 130 du décodeur télévisuel DEC 110 et chaque application de terminal T1 101, T2 102, T3 103 autorisée à échanger avec une ou plusieurs applications APP1 131, APP2 132, APP3 133 du décodeur télévisuel DEC 110.

Ce premier exemple de système de communication est particulièrement adapté à un partage d'une même réserve d'entropie avec un groupe d'applications (applications de terminal et applications APP1 131, APP2 132, APP3 133, ou application mandataire PXY 130, du décodeur télévisuel DEC 110) utilisatrices des services de l'agent de messagerie BRK 120. Rien n'empêche toutefois d'y utiliser une réserve d'entropie dédiée à chaque application de terminal utilisatrice des services de l'agent de messagerie BRK 120.

A noter que, bien que l'agent de messagerie BRK 120 soit inclus sur la Fig. 1 dans le décodeur télévisuel DEC 110, l'agent de messagerie BRK 120 peut aussi être installé dans un dispositif tiers du réseau domestique NET 100. Les communications dans le réseau domestique NET 100 avec l'agent de messagerie BRK 120 peuvent être sécurisées grâce par exemple au protocole TLS complété par le protocole SASL. Comme expliqué en partie introductive, cela permet de sécuriser les échanges de données avec l'agent de messagerie BRK 120 (protocole d'échanges avec l'agent de messagerie BRK 120), mais pas de sécuriser les échanges de données de bout-en-bout entre applications. Cela apporte un degré de sécurisation supplémentaire, mais ne répond pas au problème de faille de sécurité soulevé par la présence de l'agent de messagerie BRK 120 lui-même.

La **Fig. 2** illustre schématiquement un second exemple d'un système de communication dans lequel la présente invention peut être implémentée.

Sur la Fig. 2, le système de communication comporte un système de nuage informatique CLD 210, auquel est connecté au moins un terminal T1' 201, T2' 202, T3' 203, T4' 204, par exemple grâce à l'Internet. Il est rappelé qu'un système de nuage informatique est une ou plusieurs tranches, typiquement sous forme de machines virtuelles, dans une ferme de serveurs. Par exemple, les terminaux T1' 201, T2' 202 appartiennent à un premier réseau domestique NET1 201 et les terminaux T3' 203, T4' 204 appartiennent à un second réseau domestique NET2 202. Par exemple, les terminaux T1' 201 et T3' 203 sont des passerelles domestiques et les terminaux T2' 202 et T4' 204 sont des décodeurs télévisuels accédant à l'Internet via lesdites passerelles domestiques.

Le système de nuage informatique CLD 210 comporte une ou plusieurs instances logicielles d'une application, appelées fonctions lambda dans les fonctionnalités offertes par les services du système de nuage informatique de Amazon Web Services (marque déposée). Le système de nuage informatique CLD 210 comporte en outre l'agent de messagerie BRK 120, par exemple de type WAMP. Chaque terminal T1' 201, T2' 202, T3' 203, T4' 204 comporte une application adaptée et configurée pour communiquer avec une ou plusieurs instances d'applications LBD1 231, LBD2 232, LBD3 233 du système de nuage informatique CLD 210 par l'intermédiaire de l'agent de messagerie BRK 120. Comme illustré sur la Fig. 2, il est possible qu'une instance d'application LBD1 231 serve d'intermédiaire entre au moins une autre instance d'application LBD2 232, LBD3 233 et l'agent de messagerie BRK 120. Le système de nuage informatique CLD 210 comporte en outre une base de données SGBD 240 (par exemple, une base de données de type REDIS (« REmote DIctionary Server » en anglais) en mémoire) partagée par les instances d'applications LBD1 231, LBD2 232, LBD3 233. Y est stockée dans chaque réserve d'entropie à partager entre le système de nuage informatique CLD 210 et les applications des terminaux T1' 201, T2' 202, T3' 203, T4' 204. L'invention permet ainsi notamment de faire remonter des données analytiques depuis les terminaux T1' 201, T2' 202, T3' 203, T4' 204 vers le système de nuage informatique CLD 210 afin d'être traitées par apprentissage automatique (« Machine Leaming » en anglais) en vue d'optimiser les configurations des terminaux T1' 201, T2' 202, T3' 203, T4' 204 et/ou d'autres terminaux.

Ce second exemple de système de communication est particulièrement adapté à un partage d'une réserve d'entropie dédiée à chaque application de terminal utilisatrice des services de l'agent de messagerie BRK 120. Les échanges entre chacun des terminaux T1' 201, T2' 202, T3' 203, T4' 204 et le système de nuage informatique CLD 210 sont ainsi parfaitement isolés les uns des autres.

Ce second exemple de système de communication est aussi particulièrement adapté, en variante, à ce qu'une réserve d'entropie soit dédiée à des émissions de données sécurisées de bout-en-bout depuis un premier dispositif vers d'autres dispositifs (au moins un second dispositif et un troisième dispositif). Une réserve d'entropie est alors dédiée uniquement à l'émission de messages venant du premier dispositif via l'agent de messagerie BRK 120 et à la réception de ces messages par lesdits autres dispositifs (pour le déchiffrement des messages émis par ledit premier dispositif via l'agent de messagerie BRK 120). Une même réserve d'entropie ne s'applique alors pas dans les deux sens de communication. Cette approche pourrait aussi s'appliquer dans le contexte du premier exemple de système de communication.

Ce second exemple de système de communication est aussi particulièrement adapté, en autre variante ou en complément de la précédente variante, à ce qu'une réserve d'entropie soit dédiée à des réceptions de données sécurisées de bout-en-bout vers un premier dispositif depuis d'autres dispositifs (au moins un second dispositif et un troisième dispositif). Une réserve d'entropie est alors dédiée uniquement à l'émission de messages à destination du premier dispositif via l'agent de messagerie BRK 120 et à la réception de ces messages par ledit premier dispositif (pour le déchiffrement de ces messages par ledit premier dispositif). Comme dans la variante précédente, une même réserve d'entropie ne s'applique alors pas dans les deux sens de communication. Cette approche pourrait aussi s'appliquer dans le contexte du premier exemple de système de communication.

A noter que, bien que l'agent de messagerie BRK 120 soit inclus sur la Fig. 2 dans le système de nuage informatique CLD 210, l'agent de messagerie BRK 120 peut aussi être installé dans un dispositif tiers. Les communications avec l'agent de messagerie BRK 120 peuvent être sécurisées grâce par exemple au protocole TLS complété par le protocole SASL. Comme expliqué en partie introductive, cela permet de sécuriser les échanges de données avec l'agent de messagerie BRK 120 (protocole d'échanges avec l'agent de messagerie BRK 120), mais pas de sécuriser les échanges de données de bout-en-bout entre une application de terminal et une instance d'application dans le système de nuage informatique CLD 210.

Comme pour le contexte de la Fig. 1, cela apporte un degré de sécurisation supplémentaire, mais ne répond pas au problème de faille de sécurité soulevé par la présence de l'agent de messagerie BRK 120 lui-même.

Comme détaillé ci-après, la réserve d'entropie est partagée grâce à des messages de signalisation chiffrés grâce à un chiffrement asymétrique afin de satisfaire les exigences de confidentialité et comportent en outre une signature de message afin de satisfaire les exigences de non-répudiation. La réserve d'entropie hérite ainsi de la non-répudiation assurée grâce à la signature de messages de signalisation servant à transmettre, et ainsi partager, la réserve d'entropie. Cet héritage permet alors, dans des échanges de messages de données subséquents, de n'utiliser qu'un code d'authentification de message MAC (« Message Authentication Code » en anglais), e.g., de type HMAC, et un chiffrement symétrique utilisant la réserve d'entropie partagée sans remettre en cause les exigences de non-répudiation. Pour rappel, un code d'authentification de message MAC est un code accompagnant des données dans le but d'assurer l'intégrité de ces dernières, en permettant de vérifier qu'elles n'ont subi aucune modification. Le code d'authentification de messages MAC assure non seulement une fonction de vérification de l'intégrité du message, comme le permettrait une simple fonction de hachage, mais assure de plus une fonction d'authentification, grâce à un partage de clef secrète. Un code d'authentification de message de type HMAC est un code d'authentification de message MAC qui est calculé en utilisant une fonction de hachage cryptographique en combinaison avec la clef secrète, pour une plus grande robustesse.

Ainsi, une fois la réserve d'entropie partagée, les ressources de traitement nécessaires au chiffrement des messages à transmettre par l'intermédiaire de l'agent de messagerie BRK 120 et au déchiffrement des messages reçus par l'intermédiaire de l'agent de messagerie BRK 120 restent faibles par rapport à des mécanismes de chiffrement asymétrique. Cela signifie que l'invention permet de supporter des équipements communicants ayant des capacités de traitement variées (i.e., pouvant aussi bien être des ressources de traitement d'équipements embarqués que des ressources de traitement de nuage informatique), éventuellement au sein d'un même système de communication.

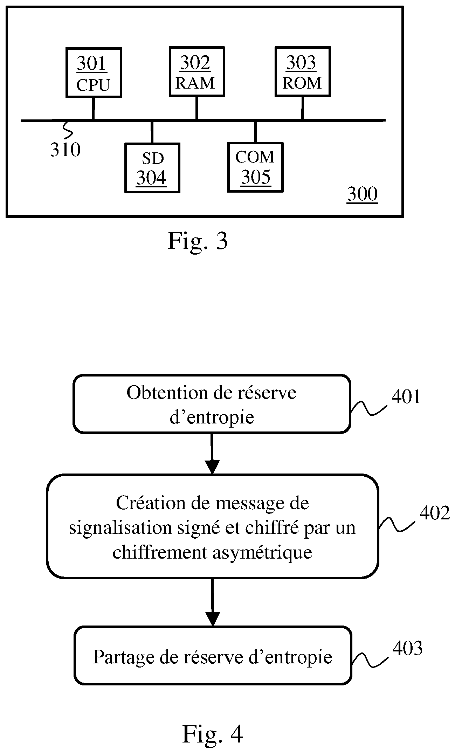

La **Fig. 3** illustre schématiquement un exemple d'architecture matérielle d'agencement matériel de dispositif du système de communication, comme par exemple les terminaux T1 101, T2 102, T3 103 et/ou les terminaux T1' 201, T2' 202, T3' 203, T4' 204 et/ou le décodeur télévisuel DEC 110 et/ou des serveurs formant le système de nuage informatique CLD 210.

L'exemple d'architecture matérielle présenté comporte, reliés par un bus de communication 310 : un processeur CPU 301 ; une mémoire vive RAM (« Random Access Memory » en anglais) 302 ; une mémoire morte ROM (« Read Only Memory » en anglais) 303 ou une mémoire Flash ; une unité de stockage ou un lecteur de support de stockage, tel qu'un lecteur de cartes SD (« Secure Digital » en anglais) 304 ou un disque dur HDD (« Hard Disk Drive » en anglais) ; et au moins un ensemble d'interfaces de communication COM 305. L'ensemble d'interfaces de communication COM 305 permet au dispositif de communication considéré de communiquer dans le système de communication et plus particulièrement via l'agent de messagerie BRK 120.

Le processeur CPU 301 est capable d'exécuter des instructions chargées dans la mémoire RAM 302 à partir de la mémoire ROM 303, d'une mémoire externe (telle qu'une carte SD), d'un support de stockage (tel que le disque dur HDD), ou d'un réseau de communication. Lors de la mise sous tension, le processeur CPU 301 est capable de lire de la mémoire RAM 302 des instructions et de les exécuter. Ces instructions forment un programme d'ordinateur causant la mise en oeuvre, par le processeur CPU 301, de tout ou partie des algorithmes et étapes décrits ici.

Ainsi, tout ou partie des algorithmes et étapes décrits ici peut être implémenté sous forme logicielle par exécution d'un ensemble d'instructions par une machine programmable, telle qu'un DSP (« Digital Signal Processor » en anglais) ou un microcontrôleur ou un processeur. Tout ou partie des algorithmes et étapes décrits ici peut aussi être implémenté sous forme matérielle par une machine ou un composant dédié, tel qu'un FPGA (« Field-Programmable Gate Array » en anglais) ou un ASIC (« Application-Specific Integrated Circuit » en anglais). Ainsi, le dispositif de communication considéré comporte de la circuiterie électronique adaptée et configurée pour implémenter les algorithmes et étapes décrits ici. La **Fig. 4** illustre schématiquement un algorithme de partage de réserve d'entropie. Considérons à titre illustratif que la réserve d'entropie est fournie par l'application mandataire PXY 130.

Dans une étape 401, l'application mandataire PXY 130 obtient une réserve d'entropie. La réserve d'entropie est par exemple obtenue par configuration de l'application mandataire PXY 130 (e.g., à l'installation, ou à la fabrication, ou lors d'une mise à jour du décodeur télévisuel DEC 110). L'application mandataire PXY 130 obtient la réserve d'entropie par lecture d'une zone mémoire dans laquelle est stockée la réserve d'entropie. Dans le cas de l'instance d'application LBD1 231 du système de nuage informatique CLD 210 de la Fig. 2, l'instance d'application LBD1 231 obtient la réserve d'entropie auprès de la base de données SGBD 240.

La réserve d'entropie est un ensemble de données aptes à générer des clefs d'authentification et des clefs de chiffrement symétrique. Les clefs d'authentification et les clefs de chiffrement symétrique sont identifiées grâce à des identifiants respectifs permettant de retrouver les données correspondantes dans la réserve d'entropie.

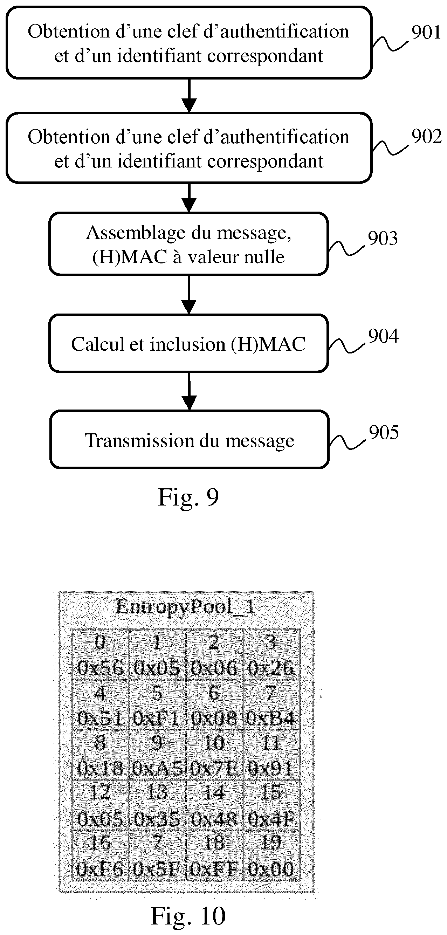

Préférentiellement, les clefs d'authentification et les clefs de chiffrement symétrique sont générées par agrégation de données stockées dans la réserve d'entropie. Par exemple, les données sont exprimées sur 8 bits et les clefs d'authentification et les clefs de chiffrement symétrique sont générées en agrégeant 16 données de 8 bits afin de former des clefs de 128 bits. Chaque donnée (e.g., de 8 bits) est identifiée dans la réserve d'entropie grâce à une valeur d'index qui lui est propre. Cet agencement est schématiquement illustré sur la **Fig. 10** pour une réserve d'entropie libellée EntropyPool_1. Il est ainsi possible de créer un identifiant d'une clef d'authentification ou d'une clef de chiffrement symétrique par agrégation des valeurs d'index des données constitutives de ladite clef. Une même donnée peut être utilisée plusieurs fois pour former une clef d'authentification ou une clef de chiffrement symétrique, ce qui signifie que sa valeur d'index apparaît plusieurs fois dans l'identifiant de la clef en question. Considérons par exemple une clef d'authentification de 128 bits définie comme suit :
0x057E004F480856260891F6FF56F10548

La clef d'authentification ainsi définie peut alors être identifiée grâce à l'agrégation des index des données de 8 bits correspondantes dans la réserve d'entropie illustrée à la Fig. 10 comme suit :
{1 ; 10 ; 19 ; 15 ; 14 ; 6 ; 0 ; 3 ; 6 ; 11 ; 16 ; 18 ; 0 ; 5 ; 1 ; 14}

Cette approche permet d'échanger des identifiants de clefs d'authentification et des identifiants de clefs de chiffrement symétrique, à partir desquels seuls les connaisseurs de la réserve d'entropie peuvent retrouver les clefs en question.

Dans un mode de réalisation particulier, il est aussi possible d'utiliser une table d'agrégations d'index. Les agrégations d'index susmentionnées qui définissent les clefs d'authentification et les clefs de chiffrement symétrique peuvent être stockées dans ladite table d'agrégations d'index au fur et à mesure de la création desdites clefs. En d'autres termes, il n'est nécessaire de fournir l'agrégation d'index en question que dans le premier message dans lequel est définie la clef en question. Il est alors possible d'utiliser ultérieurement, à la place de l'agrégation d'index qui définit telle ou telle clef, l'index dans ladite table d'agrégations d'index auquel est stockée l'agrégation d'index qui forme ladite clef.

Dans une étape 402, l'application mandataire PXY 130 crée un message de signalisation destiné à partager la réserve d'entropie obtenue à l'étape 401. Le message de signalisation est chiffré grâce à un chiffrement asymétrique afin de satisfaire les exigences de confidentialité et comporte en outre une signature de message afin de satisfaire les exigences de non-répudiation. Le chiffrement est réalisé en utilisant une clef publique du destinataire ou des destinataires de la réserve d'entropie. Le ou les destinataires utilisent leur clef privée (un même jeu de clefs privée et publique est commun à plusieurs destinataires en cas de partage de groupe) pour décoder le message, pour ainsi récupérer la réserve d'entropie transmise. La signature est réalisée avec la clef privée de l'expéditeur (i.e., de l'application mandataire PXY 130 dans l'exemple traité ici). Le ou les destinataires utilisent alors la clef publique de l'expéditeur pour vérifier l'authenticité du message reçu. La connaissance des clefs publiques des intervenants est préalable au partage de la réserve d'entropie. Cela peut être réalisé par configuration ou par échange de messages en clair avec authentification et intégrité, le non chiffrement du message ne posant pas de problème de sécurité étant donné que seule la clef publique peut vérifier la signature d'un message réalisée avec la clef privée correspondante et seule la clef privée peut déchiffrer un message chiffré avec la clef publique correspondante.

Dans une étape 403, l'application mandataire PXY 130 partage la réserve d'entropie obtenue à l'étape 401, en transmettant au ou aux destinataires le message de signalisation créé à l'étape 402. Le partage de la réserve d'entropie s'effectue alors par l'intermédiaire de l'agent de messagerie BRK 120. Le chiffrement asymétrique appliqué évite que l'agent de messagerie BRK 120 puisse accéder au contenu de la réserve d'entropie, en assurant que le message de signalisation puisse uniquement être déchiffré par le ou les destinataires ciblés. La signature assure au ou aux destinataires que la réserve d'entropie est effectivement fournie par l'expéditeur attendu (i.e., de l'application mandataire PXY 130 dans l'exemple traité ici).

L'algorithme de la Fig. 4 est préférentiellement déclenché à l'initiative du ou des destinataires de la réserve d'entropie. L'algorithme de la Fig. 4 peut en variante être déclenché à l'initiative de l'expéditeur de la réserve d'entropie. L'algorithme de la Fig. 4 peut aussi être réitéré pour mettre à jour la réserve d'entropie, par exemple de manière régulière.

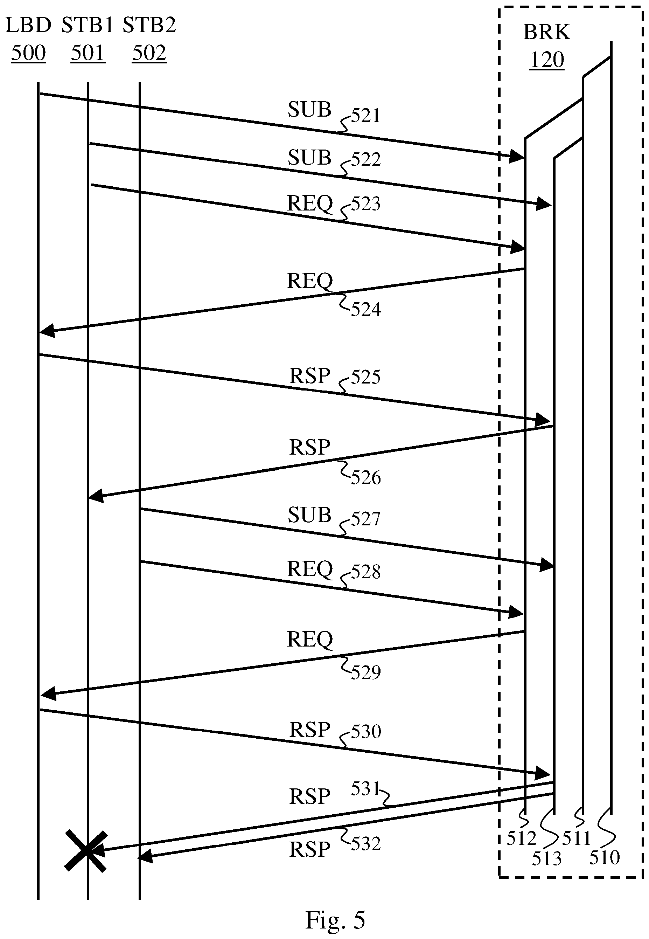

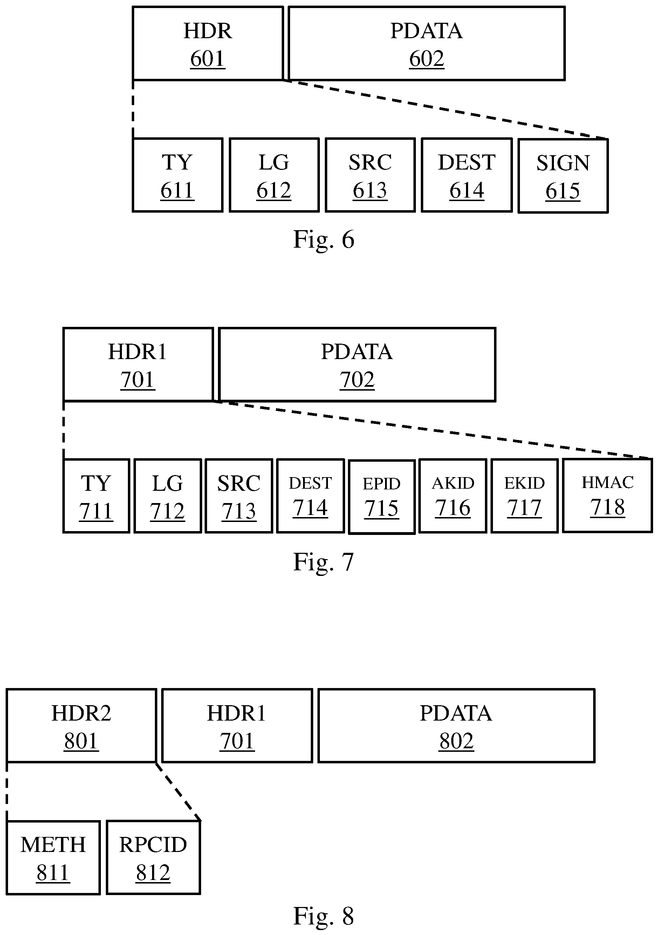

Un exemple de procédure de partage de la réserve d'entropie est détaillé ci-après en relation avec la Fig. 5. Un exemple de format de message de signalisation adapté au partage de la réserve d'entropie est détaillé ci-après en relation avec la Fig. 6.

Une fois la réserve d'entropie ainsi partagée, il est possible d'utiliser un chiffrement symétrique reposant sur l'utilisation de cette réserve d'entropie, la non-répudiation étant alors héritée du chiffrement asymétrique et de la signature utilisés pour le partage de ladite réserve d'entropie. Des exemples de format de messages sécurisés grâce au partage de réserve d'entropie sont détaillés ci-après en relation avec les Figs. 7 et 8.

La **Fig. 5** illustre schématiquement un exemple d'échanges pour le partage de réserve d'entropie. L'exemple de la Fig. 5 est basé sur l'exemple de système de communication de la Fig. 2. Sur la Fig. 5, le partage de deux réserves d'entropie est réalisé : un premier partage entre une instance d'application LBD 500 (e.g., l'instance d'application LBD1 231) et un premier décodeur télévisuel STB1 501, et un second partage entre l'instance d'application LBD 500 et un second décodeur télévisuel STB2 502.

L'agent de messagerie BRK 120 utilise préférentiellement une arborescence de thèmes (« topics tree » en anglais). Ces thèmes sont des points d'ancrage sur la messagerie. Il est ainsi possible de poster des messages en pointant sur un thème donné, c'est-à-dire en pointant sur un noeud correspondant de l'arborescence, et de recevoir ces messages par souscription ou enregistrement) auprès du thème. Les thèmes permettent en outre d'aisément gérer le contrôle d'accès. De manière analogue, un modèle de données hiérarchisé (« hierarchical data model » en anglais) peut être utilisé, ce qui permet de rendre génériques les types de messages échangés.

Par exemple, l'arborescence de thèmes comporte une racine 510, dénotée « /Root » dont dépend un premier noeud 511 dénoté « ZRoot/EntropyPool ». Du premier noeud 511 dépendent un second noeud 512 dénoté « /Root/EntropyPool/Req » et un troisième noeud 513 dénoté « /Root/EntropyPool/Ntfy ». Des thèmes sont ainsi spécifiquement définis pour, d'un côté, requérir une réserve d'entropie, et d'un autre côté, pour transmettre en réponse la réserve d'entropie requise.

Dans une étape 521, l'instance d'application LBD 500 transmet à l'agent de messagerie BRK 120 un premier message de souscription SUB ciblant le noeud 512 de l'arborescence de thèmes. L'agent de messagerie BRK 120 enregistre alors que l'instance d'application LBD 500 a effectué une souscription via le noeud 512.

Dans une étape 522, le premier décodeur télévisuel STB1 501 transmet à l'agent de messagerie BRK 120 un second message de souscription SUB ciblant le noeud 513 de l'arborescence de thèmes. L'agent de messagerie BRK 120 enregistre alors que le premier décodeur télévisuel STB1 501 a effectué une souscription via le noeud 513. Ultérieurement, dans une étape 523, le premier décodeur télévisuel STB1 501 envoie une première requête REQ ciblant le noeud 512 de l'arborescence de thèmes. La première requête REQ est à destination de l'instance d'application LBD 500 (qui est préférentiellement l'instance d'application LBD1 231 agissant comme point d'entrée du système de nuage informatique CLD 210) et demande une transmission d'une réserve d'entropie pour le premier décodeur télévisuel STB1 501. La première requête REQ est signée avec la clef privée de la source, à savoir le premier décodeur télévisuel STB1 501. Il n'est pas strictement nécessaire que la première requête REQ contienne des données utiles (« payload data » en anglais). Si tel est le cas, les données utiles sont chiffrées de manière asymétrique avec la clef publique du destinataire, à savoir l'instance d'application LBD 500 (qui est préférentiellement l'instance d'application LBD1 231 agissant comme point d'entrée du système de nuage informatique CLD 210), pour en assurer la confidentialité. Par exemple, la première requête REQ est conforme au format illustré sur la Fig. 6. Dans l'étape 523, la première requête REQ est encapsulée dans un message conforme au protocole d'échanges avec l'agent de messagerie BRK 120, ce qui signifie que, par cette encapsulation, le message est adressé par le premier décodeur télévisuel STB1 501 à l'agent de messagerie BRK 120. Dans une étape 524, l'agent de messagerie BRK 120 détecte que la première requête REQ cible le noeud 512 de l'arborescence de thèmes, via lequel l'instance d'application LBD 500 a effectué une souscription à l'étape 521, et propage alors la première requête REQ à l'instance d'application LBD 500. Pour ce faire, l'agent de messagerie BRK 120 désencapsule le message transmis par le premier décodeur télévisuel STB1 501 et réencapsule la première requête REQ dans un message conforme au protocole d'échanges avec l'agent de messagerie BRK 120, ce qui signifie que, par cette encapsulation, le message est adressé par l'agent de messagerie BRK 120 à l'instance d'application LBD 500.

Dans une étape 525, l'instance d'application LBD 500 désencapsule le message reçu de l'agent de messagerie BRK 120. L'instance d'application LBD 500 vérifie que la première requête REQ est signée avec la clef privée du premier décodeur télévisuel STB 1 501 duquel ladite première requête REQ provient.

Si la première requête REQ n'est pas correctement signée, l'instance d'application LBD 500 ignore la première requête REQ.

Si la première requête REQ est correctement signée et que la première requête REQ contient des données utiles, l'instance d'application LBD 500 déchiffre les données utiles avec sa clef privée, les données utiles ayant été chiffrées de manière asymétrique. Ensuite, l'instance d'application LBD 500 récupère la réserve d'entropie destinée à être partagée avec le premier décodeur télévisuel STB 1 501 et envoie en retour une première réponse RSP ciblant le noeud 513 de l'arborescence de thèmes. La première réponse RSP est à destination du premier décodeur télévisuel STB 1 501 et inclut la réserve d'entropie demandée. La première réponse RSP est signée en utilisant la clef privée de l'instance d'application LBD 500. Les données utiles de la première réponse RSP contiennent la réserve d'entropie demandée et sont chiffrées de manière asymétrique avec la clef publique du destinataire, à savoir le premier décodeur télévisuel STB 1 501, pour en assurer la confidentialité. Lorsque plusieurs réserves d'entropie sont susceptibles d'être utilisées dans le système de communication, les données utiles contiennent préférentiellement en outre un identifiant de réserve d'entropie. Par exemple, la première réponse RSP est conforme au format illustré sur la Fig. 6. Dans l'étape 525, la première réponse RSP est encapsulée dans un message conforme au protocole d'échanges avec l'agent de messagerie BRK 120, ce qui signifie que, par cette encapsulation, le message est adressé par l'instance d'application LBD 500 à l'agent de messagerie BRK 120.

Dans une étape 526, l'agent de messagerie BRK 120 détecte que la première réponse RSP cible le noeud 513 de l'arborescence de thèmes, via lequel le premier décodeur télévisuel STB1 501 a effectué une souscription à l'étape 522, et propage alors la première réponse RSP au premier décodeur télévisuel STB 1 501. Pour ce faire, l'agent de messagerie BRK 120 désencapsule le message transmis par l'instance d'application LBD 500 et réencapsule la première réponse RSP dans un message conforme au protocole d'échanges avec l'agent de messagerie BRK 120, ce qui signifie que, par cette encapsulation, le message est adressé par l'agent de messagerie BRK 120 au premier décodeur télévisuel STB 1 501. Sur réception de la première réponse RSP, le premier décodeur télévisuel STB 1 501 désencapsule le message transmis par l'agent de messagerie BRK 120 et vérifie que la première réponse RSP est signée par la clef privée de l'instance d'application LBD 500 de laquelle ladite première réponse RSP provient.

Si la première réponse RSP n'est pas correctement signée, le premier décodeur télévisuel STB1 501 ignore la première réponse RSP.

Si la première réponse RSP est correctement signée, le premier décodeur télévisuel STB1 501 déchiffre les données utiles avec sa clef privée, les données utiles ayant été chiffrées de manière asymétrique. Le premier décodeur télévisuel STB1 501 récupère ainsi, et stocke en mémoire, la réserve d'entropie fournie par l'instance d'application LBD 500. Cette réserve d'entropie est alors partagée entre l'instance d'application LBD 500 et le premier décodeur télévisuel STB 1 501. Cette réserve d'entropie hérite de la non-répudiation liée à la manière dont elle a été transmise par l'instance d'application LBD 500 au premier décodeur télévisuel STB1 501, et permet de transmettre des messages ultérieurs entre l'instance d'application LBD 500 et le premier décodeur télévisuel STB1 501 grâce à un chiffrement symétrique sans perdre le bénéfice de la non-répudiation.

Dans une étape 527, le second décodeur télévisuel STB2 502 transmet à l'agent de messagerie BRK 120 un troisième message de souscription SUB ciblant le noeud 513 de l'arborescence de thèmes. L'agent de messagerie BRK 120 enregistre alors que le second décodeur télévisuel STB2 502 a effectué une souscription via le noeud 513. Ultérieurement, dans une étape 528, le second décodeur télévisuel STB2 502 envoie une seconde requête REQ ciblant le noeud 512 de l'arborescence de thèmes. La seconde requête REQ est à destination de l'instance d'application LBD 500 (qui est préférentiellement l'instance d'application LBD1 231 agissant comme point d'entrée du système de nuage informatique CLD 210) et demande une transmission d'une réserve d'entropie pour le second décodeur télévisuel STB2 502. La seconde requête REQ est signée avec la clef privée du second décodeur télévisuel STB2 502. Il n'est pas strictement nécessaire que la seconde requête REQ contienne des données utiles. Si tel est le cas, les données utiles sont chiffrées de manière asymétrique en utilisant la clef publique du destinataire, à savoir l'instance d'application LBD 500, pour en assurer la confidentialité. Dans l'étape 528, la seconde requête REQ est encapsulée dans un message conforme au protocole d'échanges avec l'agent de messagerie BRK 120, ce qui signifie que, par cette encapsulation, le message est adressé par le second décodeur télévisuel STB2 502 à l'agent de messagerie BRK 120.

Dans une étape 529, l'agent de messagerie BRK 120 détecte que la seconde requête REQ cible le noeud 512 de l'arborescence de thèmes, via lequel l'instance d'application LBD 500 a effectué une souscription à l'étape 521, et propage alors la seconde requête REQ à l'instance d'application LBD 500. Pour ce faire, l'agent de messagerie BRK 120 désencapsule le message transmis par le second décodeur télévisuel STB2 502 et réencapsule la seconde requête REQ dans un message conforme au protocole d'échanges avec l'agent de messagerie BRK 120, ce qui signifie que, par cette encapsulation, le message est adressé par l'agent de messagerie BRK 120 à l'instance d'application LBD 500.

Dans une étape 530, l'instance d'application LBD 500 désencapsule le message reçu de l'agent de messagerie BRK 120. L'instance d'application LBD 500 vérifie que la seconde requête REQ est signée par la clef privée du second décodeur télévisuel STB2 502 duquel ladite seconde requête REQ provient.

Si la seconde requête REQ n'est pas correctement signée, l'instance d'application LBD 500 ignore la seconde requête REQ.

Si la seconde requête REQ est correctement signée et que la seconde requête REQ contient des données utiles, l'instance d'application LBD 500 déchiffre les données utiles avec sa clef privée, les données utiles ayant été chiffrées de manière asymétrique. Ensuite, l'instance d'application LBD 500 récupère la réserve d'entropie destinée à être partagée avec le second décodeur télévisuel STB2 502 (qui peut, ou pas, être la même que celle précédemment partagée avec le premier décodeur STB1 501) et envoie en retour une seconde réponse RSP ciblant le noeud 513 de l'arborescence de thèmes. La seconde réponse RSP est à destination du second décodeur télévisuel STB2 502 et inclut la réserve d'entropie demandée. La seconde réponse RSP est signée par la clef privée de l'instance d'application LBD 500. Les données utiles de la seconde réponse RSP contiennent la réserve d'entropie demandée et sont chiffrées de manière asymétrique avec la clef publique du destinataire, à savoir le second décodeur télévisuel STB2 502, pour en assurer la confidentialité. Lorsque plusieurs réserves d'entropie sont susceptibles d'être utilisées dans le système de communication, les données utiles contiennent préférentiellement en outre un identifiant de réserve d'entropie. Par exemple, la seconde réponse RSP est conforme au format illustré sur la Fig. 6. Dans l'étape 530, la seconde réponse RSP est encapsulée dans un message conforme au protocole d'échanges avec l'agent de messagerie BRK 120, ce qui signifie que, par cette encapsulation, le message est adressé par l'instance d'application LBD 500 à l'agent de messagerie BRK 120.

Dans une étape 531, l'agent de messagerie BRK 120 détecte que la seconde réponse RSP cible le noeud 513 de l'arborescence de thèmes, via lequel le premier décodeur télévisuel STB1 501 a effectué une souscription à l'étape 522 et via lequel le second décodeur télévisuel STB2 502 a effectué une souscription à l'étape 527. L'agent de messagerie BRK 120 propage alors la seconde réponse RSP au premier décodeur télévisuel STB 1 501 dans une étape 531 et propage la seconde réponse RSP au second décodeur télévisuel STB2 502 dans une étape 532. Pour ce faire, l'agent de messagerie BRK 120 désencapsule le message transmis par l'instance d'application LBD 500 et réencapsule la seconde réponse RSP dans deux messages conformes au protocole d'échanges avec l'agent de messagerie BRK 120. Par cette encapsulation, un de ces messages est adressé par l'agent de messagerie BRK 120 au premier décodeur télévisuel STB 1 501 et un autre de ces messages est adressé par l'agent de messagerie BRK 120 au second décodeur télévisuel STB2 502. Le premier décodeur télévisuel STB1 501 détecte que la seconde réponse RSP ne lui est pas destinée et ignore la seconde réponse RSP.

Sur réception de la seconde réponse RSP, le second décodeur télévisuel STB2 502 désencapsule le message transmis par l'agent de messagerie BRK 120 et vérifie que la seconde réponse RSP est signée par la clef privée de l'instance d'application LBD 500 de laquelle ladite seconde réponse RSP provient.

Si la seconde réponse RSP n'est pas correctement signée, le second décodeur télévisuel STB2 502 ignore la seconde réponse RSP.

Si la seconde réponse RSP est correctement signée, le second décodeur télévisuel STB2 502 déchiffre les données utiles avec sa clef privée, les données utiles ayant été chiffrées de manière asymétrique. Le second décodeur télévisuel STB2 502 récupère ainsi, et stocke en mémoire, la réserve d'entropie fournie par l'instance d'application LBD 500. Cette réserve d'entropie est alors partagée entre l'instance d'application LBD 500 et le second décodeur télévisuel STB2 502. Cette réserve d'entropie hérite de la non-répudiation liée à la manière dont elle a été transmise par l'instance d'application LBD 500 au second décodeur télévisuel STB2 502, et permet de transmettre des messages ultérieurs entre l'instance d'application LBD 500 et le second décodeur télévisuel STB2 502 grâce à un chiffrement symétrique sans perdre le bénéfice de la non-répudiation.

La **Fig. 6** illustre schématiquement un exemple de format de message de signalisation pour le partage de réserve d'entropie. Le format de message de la Fig. 6 est ainsi adapté aux transmissions des requêtes REQ et des réponses RSP évoquées dans le cadre de la Fig. 5. Le format de message de la Fig. 6 ne montre pas l'encapsulation liée au protocole d'échanges avec l'agent de messagerie BRK 120.

Le message possède un entête (« header » en anglais) HDR 601 et potentiellement des données utiles PDATA 602 chiffrées par chiffrement asymétrique. L'entête HDR 601 inclut un champ TY 611 indiquant le type du message (requête, réponse), un champ LG 612 indiquant la taille des données utiles PDATA 602, un champ SRC 613 identifiant la source du message, un champ DEST 614 identifiant le destinataire du message, et un champ SIGN 615 comportant la signature du message. La signature du message est réalisée avec la clef privée de la source du message et le chiffrement des données utiles PDATA 602 est réalisé avec la clef publique du destinataire.

L'ensemble des données (entête plus données utiles) du message est ainsi considéré comme sensible (« sensitive » en anglais) et est couvert par la fonction intégrité de la signature. Les données utiles sont ainsi considérées en outre comme confidentielles et sont protégées par chiffrement asymétrique.

La **Fig. 7** illustre schématiquement un premier exemple de format de message sécurisé grâce au partage de réserve d'entropie. Le format de message de la Fig. 7 est ainsi adapté aux transmissions de données via l'agent de messagerie BRK 120, une fois que la réserve d'entropie correspondante a été partagée. Le format de message de la Fig. 7 est adapté aux mécanismes de messagerie de type Publier-Abonner (« Publish-Subscribe » en anglais). Le format de message de la Fig. 7 ne montre pas l'encapsulation liée au protocole d'échanges avec l'agent de messagerie BRK 120.

Le message possède un entête HDR1 701 et des données utiles PDATA 702 chiffrées par chiffrement symétrique. L'entête HDR1 701 inclut un champ TY 711 indiquant le type du message, un champ LG 712 indiquant la taille des données utiles PDATA 702, un champ SRC 713 identifiant la source du message et un champ DEST 714 identifiant le destinataire du message. L'entête HDR1 701 inclut en outre un champ AKID 716 identifiant une clef d'authentification construite d'après la réserve d'entropie applicable pour la transmission du message en question. Le champ AKID 716 comporte par exemple un ensemble d'index de données de la réserve d'entropie en question, comme déjà expliqué en relation avec la Fig. 4. Selon un autre exemple, le champ AKID 716 comporte (si ce n'est pas le premier message notifiant la clef en question) un index de table d'agrégations d'index auquel est stockée l'agrégation d'index en question.

L'entête HDR1 701 inclut en outre un champ EKID 717 identifiant une clef de chiffrement symétrique construite d'après la réserve d'entropie applicable pour le chiffrement symétrique des données utiles PDATA 702. Le champ EKID 717 comporte par exemple un ensemble d'index de données de la réserve d'entropie en question, comme déjà expliqué en relation avec la Fig. 4. Selon un autre exemple, le champ EKID 717 comporte (si ce n'est pas le premier message notifiant la clef en question) un index de table d'agrégations d'index auquel est stockée l'agrégation d'index en question.

L'entête HDR1701 inclut en outre un champ HMAC 718 qui inclut un code d'authentification de message, préférentiellement de type HMAC, pour permettre d'authentifier et de vérifier l'intégrité du message en réception.

Lorsque plusieurs réserves d'entropie sont susceptibles d'être utilisées dans le système de communication, l'entête HDR1 701 comporte aussi un champ EPID 715 fournissant un identifiant de la réserve d'entropie utilisée pour générer la clef d'authentification identifiée par le champ AKID 716 et la clef de chiffrement symétrique identifiée par le champ EKID 717.

L'ensemble des données (entête HDR1 701 plus données utiles PDATA 702) du message est ainsi considéré comme sensible (« sensitive » en anglais) et est couvert par le code d'authentification de message, e.g., de type HMAC. Les données utiles PDATA 702 sont ainsi considérées en outre comme confidentielles et sont protégées par chiffrement symétrique grâce à la réserve d'entropie applicable.

La **Fig. 8** illustre schématiquement un second exemple de format de message sécurisé grâce au partage de réserve d'entropie. Ce second exemple de format de message sécurisé reprend le premier exemple schématiquement illustré sur la Fig. 7, en précédant l'entête HDR1 701 et des données utiles PDATA 802 par un autre entête HDR2 801. Le format de message de la Fig. 8 est adapté aux mécanismes de messagerie de type « routed RPC ». Le format de message de la Fig. 8 ne montre pas non plus l'encapsulation liée au protocole d'échanges avec l'agent de messagerie BRK 120.

L'entête HDR2 801 inclut un champ METH 811 identifiant quel type de méthode RPC est ciblé par le message, par exemple de type Get ou Set, ou de type Command ou Response ou Notify. L'entête HDR2 801 inclut en outre un champ RPCID 812 fournissant un identifiant de RPC ciblée par le message. Cela permet de ne pas utiliser de requête spécifique divulguant trop d'informations, et de construire l'entête HDR1 701 et les données utiles PDATA 802 comme dans le cas des mécanismes de messagerie de type Publier-Abonner.

L'entête HDR2 801 n'est pas chiffré. Le reste des données (entête HDR1 701 plus données utiles PDATA 802) du message est ainsi considéré comme sensible (« sensitive » en anglais) et est couvert par le code d'authentification de messages, e.g., de type HMAC. Les données utiles PDATA 802 sont ainsi considérées en outre comme confidentielles et sont protégées par chiffrement symétrique grâce à la réserve d'entropie applicable.

La **Fig. 9** illustre schématiquement un algorithme d'envoi de message sécurisé grâce au partage de réserve d'entropie. Considérons à titre illustratif que l'algorithme de la Fig. 9 est implémenté par l'application mandataire PXY 130.

Dans une étape 901, l'application mandataire PXY 130 obtient, à partir de la réserve d'entropie partagée avec le dispositif, ou l'application, auquel le message sécurisé est destiné, une clef d' authentification et un identifiant de clef d' authentification correspondant. Comme déjà indiqué, cet identifiant de clef d'authentification est préférentiellement construit en agrégeant des index de données stockées dans la réserve d'entropie en question. Et dans un autre mode de réalisation, au-delà du premier message, un index de table d'agrégations d'index suffit pour les messages suivants utilisant la même clef. Cela permet de diminuer la taille de l'entête de ces messages suivants.

Dans une étape 902, l'application mandataire PXY 130 obtient, à partir de la réserve d'entropie partagée avec le dispositif, ou l'application, auquel le message sécurisé est destiné, une clef de chiffrement symétrique et un identifiant de clef de chiffrement symétrique correspondant. Comme déjà indiqué, cet identifiant de clef de chiffrement symétrique est préférentiellement construit en agrégeant des index de données stockées dans la réserve d'entropie en question. Et dans un autre mode de réalisation, au-delà du premier message, un index de table d'agrégations d'index suffit pour les messages suivants utilisant la même clef. Cela permet de diminuer la taille de l'entête de ces messages suivants.

Dans une étape 903, l'application mandataire PXY 130 assemble le message en laissant le champ destiné à recevoir un code d'authentification de messages, par exemple de type HMAC, à la valeur nulle. L'application mandataire PXY 130 sécurise les données utiles par chiffrement symétrique en utilisant la clef de chiffrement symétrique obtenue à l'étape 902. L'application mandataire PXY 130 insère l'identifiant de la clef de chiffrement symétrique, ainsi que l'identifiant de la clef d'authentification obtenue à l'étape 901, en entête de message.

Dans une étape 904, l'application mandataire PXY 130 calcule le code d'authentification de messages, par exemple de type HMAC, sur le message ainsi assemblé. L'application mandataire PXY 130 insère alors le code d'authentification de messages calculé dans le champ dédié qui a été initialisé à la valeur nulle. Le format de message de la Fig. 7 ou de la Fig. 8 peut être utilisé.

Dans une étape 905, l'application mandataire PXY 130 transmet à l'agent de messagerie BRK 120 le message ainsi sécurisé, en l'encapsulant selon le protocole d'échanges avec l'agent de messagerie BRK 120. L'authenticité et l'intégrité du message peuvent ainsi être vérifiées en réception en premier lieu par contrôle du code d'authentification de messages grâce à la clef d'authentification (e.g., de type HMAC) qui est identifiée dans l'entête de message et qui est retrouvée grâce à la réserve d'entropie partagée (éventuellement en passant par la table d'agrégations d'index), et les données utiles peuvent être déchiffrées grâce à la clef de chiffrement symétrique (secret partagé) qui est aussi identifiée dans l'entête de message et qui est aussi retrouvée grâce à la réserve d'entropie partagée (éventuellement en passant par la table d'agrégations d'index).

## Revendications

1. Procédé de transmission de données sécurisée de bout-en-bout entre un premier dispositif (500, 130, 231) et un second dispositif (501, 101, 201) via un agent de messagerie (120), **caractérisé en ce que** le procédé comporte les étapes suivantes :
- partage (403) d'une réserve d'entropie entre le premier dispositif (500, 130, 231) et le second dispositif (501, 101, 201) via l'agent de messagerie (120) par transmission de messages de signalisation qui comportent une signature de message (615) et dont au moins un message de signalisation comprend dans ses données utiles (602) ladite réserve d'entropie, lesdites données utiles étant chiffrées de manière asymétrique, ladite réserve d'entropie étant un ensemble de données aptes à générer une pluralité de clefs d'authentification et de clefs de chiffrement symétrique par agrégation de données stockées dans ladite réserve d'entropie et les clefs d'authentification et de chiffrement étant identifiées grâce à des identifiants respectifs obtenus par agrégation de valeurs d'index, chaque valeur d'index identifiant une donnée constitutive de la clef, les valeurs d'index permettant de retrouver les données correspondantes dans ladite réserve d'entropie ; et
- transmission (905) de messages ultérieurs entre le premier dispositif (500, 130, 231) et le second dispositif (501, 101, 201) via l'agent de messagerie (120), chaque dit message ultérieur comportant un entête (701) et des données utiles (702, 802), l'entête (701) comportant l'identifiant (716) d'une clef d'authentification obtenue (901) à partir de la réserve d'entropie partagée et l'identifiant (715) d'une clef de chiffrement symétrique obtenue (902) à partir de la réserve d'entropie partagée, les données utiles (702, 802) étant chiffrées de manière symétrique grâce à la clef de chiffrement symétrique, et l'ensemble formé par l'entête (701) et les données utiles (702, 802) étant authentifié grâce à un code d'authentification de messages (718) obtenu grâce à la clef d'authentification et inséré dans l'entête (701).

2. Procédé selon la revendication 1, dans lequel le code d'authentification de messages est de type HMAC.

3. Procédé selon l'une des revendications 1 et 2, dans lequel la clef d'authentification est obtenue par agrégation de premières données stockées dans la réserve d'entropie et l'identifiant de la clef d'authentification est un index d'une table d'agrégation d'index auquel est stockée l'agrégation des index correspondant auxdites premières données dans la réserve d'entropie.

4. Procédé selon l'une quelconque des revendications 1 et 2, dans lequel la clef de chiffrement symétrique est obtenue par agrégation de secondes données stockées dans la réserve d'entropie et l'identifiant de la clef d'authentification est un index d'une table d'agrégation d'index auquel est stockée l'agrégation des index correspondant auxdites secondes données dans la réserve d'entropie.

5. Procédé selon l'une quelconque des revendications 1 à 4, dans lequel le premier dispositif (130, 231) effectue de la même manière des émissions et réceptions de données sécurisées de bout-en-bout avec un troisième dispositif (102, 202) via l'agent de messagerie (120), en utilisant la même réserve d'entropie qu'avec le second dispositif (101, 201).

6. Procédé selon l'une quelconque des revendications 1 à 4, dans lequel le premier dispositif (130, 231, 500) effectue de la même manière des émissions et réceptions de données sécurisées de bout-en-bout avec un troisième dispositif (102, 202, 502) via l'agent de messagerie (120), en utilisant une réserve d'entropie distincte de la réserve d'entropie utilisée avec le second dispositif (101, 201, 501).

7. Procédé selon l'une quelconque des revendications 1 à 4, dans lequel le premier dispositif (130, 231, 500) effectue des émissions de données sécurisées de bout-en-bout vers le deuxième dispositif (101, 201, 501) et un troisième dispositif (101, 201, 501) via l'agent de messagerie (120), en utilisant une réserve d'entropie dédiée uniquement à l'émission de messages venant du premier dispositif (130, 231, 500) et à la réception desdits messages par les deuxième et troisième dispositifs.

8. Procédé selon l'une quelconque des revendications 1 à 4, dans lequel le premier dispositif (130, 231, 500) effectue des réceptions de données sécurisées de bout-en-bout venant du deuxième dispositif (101, 201, 501) et d'un troisième dispositif (101, 201, 501) via l'agent de messagerie (120), en utilisant une réserve d'entropie dédiée à la réception de messages par le premier dispositif (130, 231, 500) depuis le deuxième et le troisième dispositif, et à l'émission de messages à destination dudit premier dispositif.

9. Procédé selon l'une quelconque des revendications 1 à 8, dans lequel le premier dispositif est un décodeur télévisuel (110) et le second dispositif est un terminal (101, 103) configuré et adapté pour contrôler le décodeur télévisuel (110) via la transmission de données sécurisée de bout en bout.

10. Procédé selon l'une quelconque des revendications 1 à 8, dans lequel le premier dispositif est un nuage informatique (210) et le second dispositif est un terminal (201, 203) configuré et adapté pour transmettre des données analytiques au nuage informatique (210) via la transmission de données sécurisée de bout en bout.

11. Procédé selon la revendication 10, dans lequel la réserve d'entropie est stockée, au sein du nuage informatique (210), dans une base de données (240) accessible par chaque instance d'application (231, 232, 233) en communication avec le second dispositif (201, 203).

12. Produit programme d'ordinateur comportant des instructions pour implémenter, par un processeur, le procédé selon l'une quelconque des revendications 1 à 11, lorsque ledit programme est exécuté par ledit processeur.

13. Support de stockage d'informations stockant un programme d'ordinateur comprenant des instructions pour implémenter, par un processeur, le procédé selon l'une quelconque des revendications 1 à 11, lorsque ledit programme est lu et exécuté par ledit processeur.

14. Dispositif (500, 130, 231), appelé premier dispositif, adapté et configuré pour effectuer une transmission de données sécurisée de bout-en-bout avec un second dispositif (501, 101, 201) via un agent de messagerie, **caractérisé en ce que** le premier dispositif (500, 130, 231) comporte :
- des moyens pour partager (403) une réserve d'entropie entre le premier dispositif (500, 130, 231) et le second dispositif (501, 101, 201) via l'agent de messagerie (120), par transmission de messages de signalisation qui comportent une signature de message (615) et dont au moins un message de signalisation comprend dans ses données utiles (602) ladite réserve d'entropie, lesdites données utiles étant chiffrées de manière asymétrique, ladite réserve d'entropie étant un ensemble de données aptes à générer des clefs d'authentification et des clés de chiffrement symétrique par agrégation de données stockées dans ladite réserve d'entropie et les clefs d'authentification et de chiffrement étant identifiées grâce à des identifiants respectifs obtenus par agrégation de valeurs d'index, chaque valeur d'index identifiant une donnée constitutive de la clef, les valeurs d'index permettant de retrouver les données correspondantes dans ladite réserve d'entropie ; et
- des moyens pour transmettre (905) des messages ultérieurs entre le premier dispositif (500, 130, 231) et le second dispositif (501, 101, 201) via l'agent de messagerie (120), chaque dit message ultérieur comportant un entête (701) et des données utiles (702, 802), l'entête (701) comportant l'identifiant (716) d'une clef d'authentification obtenue (901) à partir de la réserve d'entropie partagée et l'identifiant (715) d'une clef de chiffrement symétrique obtenue (902) à partir de la réserve d'entropie partagée, les données utiles (702, 802) étant chiffrées de manière symétrique grâce à la clef de chiffrement symétrique, et l'ensemble formé par l'entête (701) et les données utiles (702, 802) étant authentifié grâce à un code d'authentification de messages obtenu grâce à la clef d'authentification et inséré dans l'entête (701).

## Patentansprüche

1. Verfahren zur gesicherten Ende-zu-Ende-Datenübertragung zwischen einer ersten Vorrichtung (500, 130, 231) und einer zweiten Vorrichtung (501, 101, 201) über einen Nachrichtenbroker (120), **dadurch gekennzeichnet, dass** das Verfahren die folgenden Schritte aufweist:
- gemeinsame Benutzung (403) einer Entropiereserve zwischen der ersten Vorrichtung (500, 130, 231) und der zweiten Vorrichtung (501, 101, 201) über den Nachrichtenbroker (120) durch Übertragung von Signalisierungsnachrichten, die eine Nachrichtensignatur (615) aufweisen und von denen mindestens eine Signalisierungsnachricht die Entropiereserve in ihren Nutzdaten (602) enthält, wobei die Nutzdaten asymmetrisch verschlüsselt sind, wobei die Entropiereserve eine Einheit von Daten ist, die fähig sind, eine Vielzahl von Authentifizierungsschlüsseln und von symmetrischen Verschlüsselungsschlüsseln durch Aggregation von in der Entropiereserve gespeicherten Daten zu generieren, und die Authentifizierungs- und Verschlüsselungsschlüssel mit Hilfe von Kennungen identifiziert werden, die durch Aggregation von Indexwerten erhalten werden, wobei jeder Indexwert einen einen Teil des Schlüssels bildenden Datenwert identifiziert, wobei die Indexwerte es ermöglichen, die entsprechenden Daten in der Entropiereserve wiederzufinden; und
- Übertragen (905) von späteren Nachrichten zwischen der ersten Vorrichtung (500, 130, 231) und der zweiten Vorrichtung (501, 101, 201) über den Nachrichtenbroker (120), wobei jede spätere Nachricht eine Kopfzeile (701) und Nutzdaten (702, 802) aufweist, wobei die Kopfzeile (701) die Kennung (716) eines ausgehend von der gemeinsam genutzten Entropiereserve erhaltenen Authentifizierungsschlüssels (901) und die Kennung (715) eines ausgehend von der gemeinsam genutzten Entropiereserve erhaltenen symmetrischen Verschlüsselungsschlüssels (902) enthält, wobei die Nutzdaten (702, 802) mit Hilfe des symmetrischen Verschlüsselungsschlüssels symmetrisch verschlüsselt werden, und die von der Kopfzeile (701) und den Nutzdaten (702, 802) gebildete Einheit mit Hilfe eines Nachrichtenauthentifizierungscodes (718) authentifiziert wird, der mit Hilfe des Authentifizierungsschlüssels erhalten und in die Kopfzeile (701) eingefügt wird.

2. Verfahren nach Anspruch 1, wobei der Nachrichtenauthentifizierungscode vom Typ HMAC ist.

3. Verfahren nach einem der Ansprüche 1 und 2, wobei der Authentifizierungsschlüssel durch Aggregation erster in der Entropiereserve gespeicherter Daten erhalten wird, und die Kennung des Authentifizierungsschlüssels ein Index einer Index-Aggregationstabelle ist, an dem die Aggregation der Indices entsprechend den ersten Daten in der Entropiereserve gespeichert ist.

4. Verfahren nach einem der Ansprüche 1 und 2, wobei der symmetrische Verschlüsselungsschlüssel durch Aggregation zweiter in der Entropiereserve gespeicherter Daten erhalten wird, und die Kennung des Authentifizierungsschlüssels ein Index einer Index-Aggregationstabelle ist, an dem die Aggregation der Indices entsprechend den zweiten Daten in der Entropiereserve gespeichert ist.

5. Verfahren nach einem der Ansprüche 1 bis 4, wobei die erste Vorrichtung (130, 231) in gleicher Weise Sende- und Empfangsvorgänge von Ende-zu-Ende-gesicherten Daten mit einer dritten Vorrichtung (102, 202) über den Nachrichtenbroker (120) unter Verwendung der gleichen Entropiereserve wie mit der zweiten Vorrichtung (101, 201) ausführt.

6. Verfahren nach einem der Ansprüche 1 bis 4, wobei die erste Vorrichtung (130, 231, 500) in gleicher Weise Sende- und -Empfangsvorgänge von Ende-zu-Ende-gesicherten Daten mit einer dritten Vorrichtung (102, 202, 502) über den Nachrichtenbroker (120) unter Verwendung einer anderen Entropiereserve als die mit der zweiten Vorrichtung (101, 201, 501) verwendete Entropiereserve ausführt.

7. Verfahren nach einem der Ansprüche 1 bis 4, wobei die erste Vorrichtung (130, 231, 500) Sendevorgänge von Ende-zu-Ende-gesicherten Daten zur zweiten Vorrichtung (101, 201, 501) und zu einer dritten Vorrichtung (101, 201, 501) über den Nachrichtenbroker (120) unter Verwendung einer Entropiereserve ausführt, die nur für das Senden von von der ersten Vorrichtung (130, 231, 500) kommenden Nachrichten und für den Empfang der Nachrichten durch die zweite und dritte Vorrichtung bestimmt ist.

8. Verfahren nach einem der Ansprüche 1 bis 4, wobei die erste Vorrichtung (130, 231, 500) Empfangsvorgänge von von der zweiten Vorrichtung (101, 201, 501) und von einer dritten Vorrichtung (101, 201, 501) über den Nachrichtenbroker (120) kommenden Ende-zu-Ende-gesicherten Daten unter Verwendung einer für den Empfang von Nachrichten durch die erste Vorrichtung (130, 231, 500) von der zweiten und der dritten Vorrichtung und für das Senden von Nachrichten an die erste Vorrichtung bestimmten Entropiereserve ausführt.

9. Verfahren nach einem der Ansprüche 1 bis 8, wobei die erste Vorrichtung ein Fernsehdecoder (110) und die zweite Vorrichtung ein Endgerät (101, 103) ist, das konfiguriert und geeignet ist, den Fernsehdecoder (110) mittels der Ende-zu-Ende-gesicherten Datenübertragung zu steuern.

10. Verfahren nach einem der Ansprüche 1 bis 8, wobei die erste Vorrichtung eine Cloud (210) und die zweite Vorrichtung ein Endgerät (201, 203) ist, das konfiguriert und geeignet ist, mittels der Ende-zu-Ende-gesicherten Datenübertragung analytische Daten an die Cloud (210) zu übertragen.

11. Verfahren nach Anspruch 10, wobei die Entropiereserve innerhalb der Cloud (210) in einer Datenbank (240) gespeichert ist, die über jede Anwendungsinstanz (231, 232, 233) in Verbindung mit der zweiten Vorrichtung (201, 203) zugänglich ist.

12. Computerprogrammprodukt, das Anweisungen aufweist, um das Verfahren nach einem der Ansprüche 1 bis 11 durch einen Prozessor zu implementieren, wenn das Programm vom Prozessor ausgeführt wird.

13. Informationsspeicherträger, der ein Computerprogramm speichert, das Anweisungen enthält, um das Verfahren nach einem der Ansprüche 1 bis 11 durch einen Prozessor zu implementieren, wenn das Programm vom Prozessor gelesen und ausgeführt wird.

14. Vorrichtung (500, 130, 231), erste Vorrichtung genannt, die geeignet und konfiguriert ist, eine gesicherte Ende-zu-Ende-Datenübertragung mit einer zweiten Vorrichtung (501, 101, 201) über einen Nachrichtenbroker auszuführen, **dadurch gekennzeichnet, dass** die erste Vorrichtung (500, 130, 231) aufweist:
- Einrichtungen zur gemeinsamen Nutzung (403) einer Entropiereserve zwischen der ersten Vorrichtung (500, 130, 231) und der zweiten Vorrichtung (501, 101, 201) über den Nachrichtenbroker (120) durch Übertragung von Signalisierungsnachrichten, die eine Nachrichtensignatur (615) aufweisen und von denen mindestens eine Signalisierungsnachricht die Entropiereserve in ihren Nutzdaten (602) enthält, wobei die Nutzdaten asymmetrisch verschlüsselt sind, wobei die Entropiereserve eine Einheit von Daten ist, die fähig sind, Authentifizierungsschlüssel und symmetrische Verschlüsselungsschlüssel durch Aggregation von in der Entropiereserve gespeicherten Daten zu generieren, und die Authentifizierungs- und Verschlüsselungsschlüssel mit Hilfe von Kennungen identifiziert werden, die durch Aggregation von Indexwerten erhalten werden, wobei jeder Kennungsindexwert einen einen Teil des Schlüssels bildenden Datenwert identifiziert, wobei die Indexwerte es ermöglichen, die entsprechenden Daten in der Entropiereserve wiederzufinden; und
- Einrichtungen zum Übertragen (905) von späteren Nachrichten zwischen der ersten Vorrichtung (500, 130, 231) und der zweiten Vorrichtung (501, 101, 201) über den Nachrichtenbroker (120), wobei jede spätere Nachricht eine Kopfzeile (701) und Nutzdaten (702, 802) aufweist, wobei die Kopfzeile (701) die Kennung (716) eines ausgehend von der gemeinsam genutzten Entropiereserve erhaltenen Authentifizierungsschlüssels (901) und die Kennung (715) eines ausgehend von der gemeinsam genutzten Entropiereserve erhaltenen symmetrischen Verschlüsselungsschlüssels (902) aufweist, wobei die Nutzdaten (702, 802) mit Hilfe des symmetrischen Verschlüsselungsschlüssels symmetrisch verschlüsselt werden, und die von der Kopfzeile (701) und den Nutzdaten (702, 802) gebildete Einheit mit Hilfe eines Nachrichtenauthentifizierungscodes (718) authentifiziert wird, der mit Hilfe des Authentifizierungsschlüssels erhalten und in die Kopfzeile (701) eingefügt wird.

## Claims

1. Method for secure end-to-end transmission of data between a first device (500, 130, 231) and a second device (501, 101, 201) via a message broker (120), **characterised in that** the method comprises the following steps:
- sharing (403) of an entropy pool between the first device (500, 130, 231) and the second device (501, 101, 201) via the message broker (120), by transmitting signalling messages which comprise a message signature (615); and at least one signalling message of which comprises, in its payload (602), said entropy pool, said payload being encrypted asymmetrically, said entropy pool being a set of data able to generate a plurality of authentication keys and of symmetrical encryption keys by aggregating data stored in said entropy pool, and the authentication and encryption keys being identified by means of respective identifiers obtained by aggregating index values, each index value identifying data constituting the key, the index values making it possible to find the corresponding data in said entropy pool; and
- transmission (905) of subsequent messages between the first device (500, 130, 231) and the second device (501, 101, 201) via the message broker (120), each said subsequent message comprising a header (701) and a payload (702, 802), the header (701) comprising the identifier (716) of an authentication key obtained (901) from the shared entropy pool and the identifier (715) of a symmetrical encryption key obtained (902) from the shared entropy pool, the payload (702, 802) being encrypted symmetrically by means of the symmetrical encryption key, and the whole formed by the header (701) and the payload (702, 802) being authenticated by means of a message authentication code (718) obtained by means of the authentication key and inserted in the header (701).

2. Method according to claim 1, wherein the message authentication code is of the HMAC type.

3. Method according to one of claims 1 and 2, wherein the authentication key is obtained by aggregation of first data stored in the entropy pool and the identifier of the authentication key is an index of an index aggregation table at which the aggregation of the indices corresponding to said first data in the entropy pool is stored.

4. Method according to either one of claims 1 and 2, wherein the symmetrical encryption key is obtained by aggregation of second data stored in the entropy pool and the identifier of the authentication key is an index of an index aggregation table at which the aggregation of the indices corresponding to said second data in the entropy pool is stored.

5. Method according to any one of claims 1 to 4, wherein the first device (130, 231) performs, in the same way, secure end-to-end transmissions and receptions of data with a third device (102, 202) via the message broker (120), using the same entropy pool as with the second device (101, 201).

6. Method according to any one of claims 1 to 4, wherein the first device (130, 231, 500) performs, in the same way, secure end-to-end transmissions and receptions of data with a third device (102, 202, 502) via the message broker (120), using an entropy pool distinct from the entropy pool used with the second device (101, 201, 501).

7. Method according to any one of claims 1 to 4, wherein the first device (130, 231, 500) performs secure end-to-end transmissions of data to the second device (101, 201, 501) and a third device (101, 201, 501) via the message broker (120), using an entropy pool dedicated solely to the transmission of messages coming from the first device (130, 231, 500) and to the reception of said messages by the second and third devices.

8. Method according to any one of claims 1 to 4, wherein the first device (130, 231, 500) performs secure end-to-end receptions of data coming from the second device (101, 201, 501) and from a third device (101, 201, 501) via the message broker (120), using an entropy pool dedicated to the reception of messages by the first device (130, 231, 500) from the second and third device, and to the sending of messages to said first device.

9. Method according to any one of claims 1 to 8, wherein the first device is a television set-top box (110) and the second device is a terminal (101, 103) configured and adapted to control the television set-top box (110) via the secure end-to-end transmission of data.

10. Method according to any one of claims 1 to 8, wherein the first device is a cloud (210) and the second device is a terminal (201, 203) configured and adapted for transmitting analytical data to the cloud (210) via the secure end-to-end transmission of data.

11. Method according to claim 10, wherein the entropy pool is stored, in the cloud (210), in a database (240) accessible to each application instance (231, 232, 233) in communication with the second device (201, 203).

12. Computer program product comprising instructions for implementing, by a processor, the method according to any one of claims 1 to 11, when said program is executed by said processor.

13. Information storage medium storing a computer program comprising instructions for implementing, by a processor, the method according to any one of claims 1 to 11, when said program is read and executed by said processor.

14. Device (500, 130, 231), called first device, adapted and configured for performing a secure end-to-end transmission of data with a second device (501, 101, 201) via a message broker, **characterised in that** the first device (500, 130, 231) comprises:
- means for sharing (403) an entropy pool between the first device (500, 130, 231) and the second device (501, 101, 201) via the message broker (120), by transmitting signalling messages which comprise a message signature (615) and at least one signalling message of which comprises, in its payload (602), said entropy pool, said payload being encrypted asymmetrically, said entropy pool being a set of data able to generate a plurality of authentication keys and of symmetrical encryption keys by aggregating data stored in said entropy pool, and the authentication and encryption keys being identified by means of respective identifiers obtained by aggregating index values, each index value identifying data constituting the key, the index values making it possible to find the corresponding data in said entropy pool; and
- means for transmitting (905) subsequent messages between the first device (500, 130, 231) and the second device (501, 101, 201) via the message broker (120), each said subsequent message comprising a header (701) and a payload (702, 802), the header (701) comprising the identifier (716) of an authentication key obtained (901) from the shared entropy pool and the identifier (715) of a symmetrical encryption key obtained (902) from the shared entropy pool, the payload (702, 802) being encrypted symmetrically by means of the symmetrical encryption key, and the whole formed by the header (701) and the payload (702, 802) being authenticated by means of a message authentication code obtained by means of the authentication key and inserted in the header (701).
